# EUROPÄISCHE PATENTSCHRIFT

(11) **EP 3 066 361 B1**
(45) Veröffentlichungstag und Bekanntmachung des Hinweises auf die Patenterteilung: **19.08.2020**
(21) Anmeldenummer: 14789168.3
(22) Anmeldetag: 20.10.2014
(51) Int. Cl.: F16H 57/02, F16H 57/03

(54) **GEHÄUSE FÜR EIN GETRIEBE UND GETRIEBE MIT EINEM GEHÄUSE**
HOUSING FOR A TRANSMISSION AND TRANSMISSION COMPRISING A HOUSING
BOÎTE DE TRANSMISSION ET TRANSMISSION POURVUE D'UNE BOÎTE

(30) Priorität: 08.11.2013 DE 102013018708
(43) Veröffentlichungstag der Anmeldung: 14.09.2016
(73) Patentinhaber: SEW-EURODRIVE GmbH & Co. KG, 76646 Bruchsal (DE)
(72) Erfinder: WU, Zili, 300060 Tianjin (CN)
(86) Internationale Anmeldenummer: PCT/EP2014/002822
(87) Internationale Veröffentlichungsnummer: WO 2015/067340

(56) Entgegenhaltungen:
- CN-A- 102 463 256
- CN-A- 102 777 574
- CN-U- 201 982 626
- DE-A1-102008 004 337
- US-A- 4 914 907
- US-A- 5 156 576
- US-B2- 7 810 412

## Beschreibung

Die Erfindung betrifft ein Gehäuse für ein Getriebe und ein Getriebe mit einem Gehäuse.

Es ist allgemein bekannt, dass ein Gehäuse eines Getriebes Lageraufnahmen aufweist, in denen die Lager der Wellen des Getriebes aufnehmbar sind und die entsprechenden Kräfte abgeleitet werden.

**Aus der** US 5 156 576 A **ist ein kompaktes mehrstufiges Getriebe bekannt.**

**Aus der** DE 10 2008 004 337 A1 **ist als nächstliegender Stand der Technik ein Gehäuse für ein Getriebe bekannt.**

**Aus der** US 4 914 907 A **ist eine Achsantriebsvorrichtung bekannt.**

**Aus der** US 7 810 412 B2 **ist ein Getriebegehäuse bekannt.**

**Aus der** CN 201 982 626 U **ist ein Gehäuseunterteil eines Getriebegehäuses bekannt.**

**Aus der** CN 102 777 574 A **ist ein Gehäuseteil eines Getriebegehäuses bekannt.**

**Aus der** CN 102 463 256 A **ist ebenfalls ein Getriebe mit geteiltem Gehäuse bekannt.**

Der Erfindung liegt die Aufgabe zugrunde, ein Getriebe **materialsparend herstellbar zu machen.**

Erfindungsgemäß wird die Aufgabe bei dem Gehäuse für ein Getriebe nach den in Anspruch 1 und bei dem Getriebe mit einem Gehäuse nach den in Anspruch 4 angegebenen Merkmalen gelöst.

Wichtige Merkmale der Erfindung bei dem Gehäuse sind, dass das Gehäuse für ein Getriebe vorgesehen ist,
wobei das Gehäuse ein Gehäuseoberteil und ein Gehäuseunterteil aufweist,
**wobei** das Gehäuseoberteil einen rahmenförmigen Tragabschnitt aufweist, an dem Wandabschnitte angeformt sind,
wobei der rahmenförmige Tragabschnitt mit den Wandabschnitten einstückig, also einteilig, ausgeformt ist, insbesondere als Gussteil, insbesondere als Stahlgussteil.

Von Vorteil ist dabei, dass nur der Tragabschnitt viel Material, also auch Masse, enthalten muss, nicht aber die Wandabschnitte. Somit ist auf materialsparende Weise erreichbar, dass hohe Kräfte übertragen werden.

Bei einer vorteilhaften Ausgestaltung ist die größte Wandstärke der Wandabschnitte kleiner als die größte Wandstärke des Tragabschnitts. Von Vorteil ist dabei, dass die Wandabschnitte mit dünner Wandstärke ausführbar sind und somit das Gehäuse materialsparend ausführbar ist.

Bei einer vorteilhaften Ausgestaltung weist der rahmenförmige Tragabschnitt des Gehäuseoberteils eine erste und eine zweite Querrippe auf, insbesondere wobei die Querrippen sich hauptsächlich in horizontaler Richtung erstrecken, insbesondere also in horizontaler Richtung weiter ausgedehnt sind als in jeder hierzu transversalen Richtung,
wobei der rahmenförmige Tragabschnitt zwei erste Rippen aufweist,
wobei die zwei ersten Rippen voneinander beabstandet und sind und jeweils mit der ersten Querrippe verbunden sind, insbesondere an zwei voneinander beabstandeten Stellen,
insbesondere wobei die ersten Rippen sich hauptsächlich in vertikaler Richtung erstrecken, insbesondere also in vertikaler Richtung weiter ausgedehnt sind als in jeder hierzu transversalen Richtung,
wobei die zwei zweiten Rippen voneinander beabstandet sind und jeweils mit der zweiten Querrippe verbunden sind; insbesondere an zwei voneinander beabstandeten Stellen,
insbesondere wobei die zweiten Rippen sich hauptsächlich in vertikaler Richtung erstrecken, insbesondere also in vertikaler Richtung weiter ausgedehnt sind als in jeder hierzu transversalen Richtung. Von Vorteil ist dabei, dass eine besonders hohe Stabilität mit geringem Materialaufwand erreichbar ist. Denn der rahmenförmige Tragabschnitt weist eine rechteckförmige Gestalt auf, bei der das Rechteck an seinen beiden gegenüberliegenden Seiten aus der Ebene des Rechtecks herausgebogen ist, so dass die abgebogenen Bereiche im Wesentlichen in zur Ebene senkrechten weiteren Ebenen angeordnet sind, die zueinander beabstandet und parallel sind.

Bei einer vorteilhaften Ausgestaltung weist jede erste Rippe und jede zweite Rippe an ihrem von der jeweiligen Querrippe abgewandten Endbereich eine Tragöse auf. Von Vorteil ist dabei, dass die beim Transport ins Gehäuse eingeleiteten Kräfte direkt in den rahmenförmigen Tragabschnitt eingeleitet werden und nicht in Wandabschnitte mit dünner Wandstärke.

Bei einer vorteilhaften Ausgestaltung ist eine erste Rippe an ihrem Endbereich mit einem Balken, insbesondere Tragbalken, verbunden, der an seinem anderen Ende mit dem Endbereich einer zweiten Rippe verbunden ist,
wobei die andere Rippe an ihrem Endbereich mit einem Balken, insbesondere Tragbalken, verbunden ist, der wiederum an seinem anderen Ende mit dem Endbereich der anderen zweiten Rippe verbunden ist,
insbesondere wobei die beiden Balken parallel und voneinander beabstandet angeordnet sind. Von Vorteil ist dabei, dass eine hohe Stabilität mittels der Verstrebungen erreichbar ist.

Bei einer vorteilhaften Ausgestaltung ist eine Welle des Getriebes mittels eines Lagers im Gehäuse gelagert,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist. Von Vorteil ist dabei, dass eine zusätzliche Verstrebung des rahmenförmigen Tragabschnitts mittels der aufgedickten Bereiche vorgesehen ist.

Bei einer vorteilhaften Ausgestaltung verschließt ein Gehäusedeckel eine Öffnung des Gehäuseoberteils 1, welche von dem rahmenförmigen Tragabschnitt umfasst ist, insbesondere mit Abstand, insbesondere so dass der rahmenförmige Tragabschnitt die Öffnung nicht direkt berührt, sondern von der Öffnung beabstandet ist. Von Vorteil ist dabei, dass durch die Öffnung Getriebeteile inspizierbar sind und Wartungsarbeiten ausführbar sind. Dabei fließt auch kein Schmieröl aus dem Getriebe heraus, da die Öffnung an der Oberseite des Gehäuseoberteils angeordnet ist.

Wichtige Merkmale bei dem Getriebe sind, dass es mit einem Gehäuse vorgesehen ist, wobei
eine Welle des Getriebes mittels eines Lagers im Gehäuse gelagert ist,
wobei ein erster Teil der Lageraufnahme im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen verbunden ist, an dem auch die jeweilige Rippe verbunden ist.

Von Vorteil ist dabei, dass eine hohe Verdrehsteifigkeit und eine hohe mechanische Stabilität erreichbar ist.

Die Erfindung wird nun anhand von Abbildungen näher erläutert:
In der Figur 1 ist ein erfindungsgemäßes Getriebegehäuse für ein Getriebe in einer ersten Blickrichtung in Schrägansicht gezeigt, das aus einem Gehäuseoberteil 1 und einem Gehäuseunterteil 2 zusammengesetzt ist.

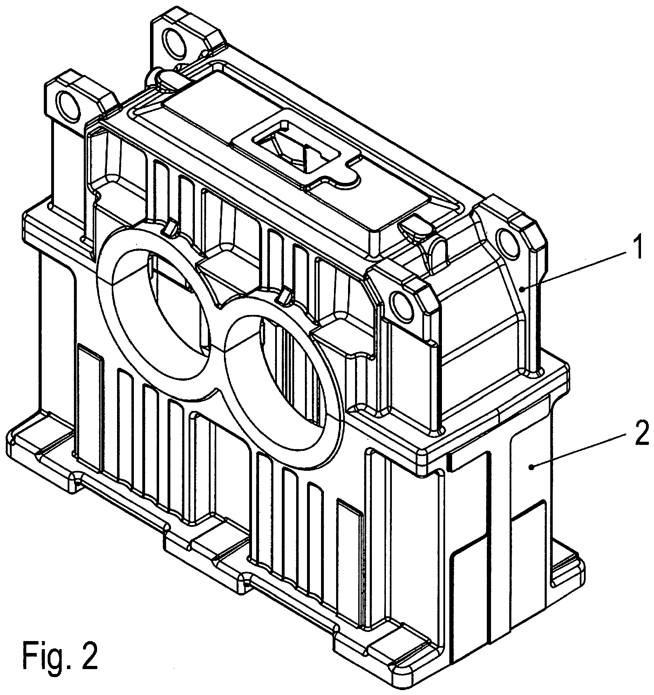

In der Figur 2 ist das erfindungsgemäße Getriebegehäuse in einer anderen Blickrichtung in Schrägansicht gezeigt.

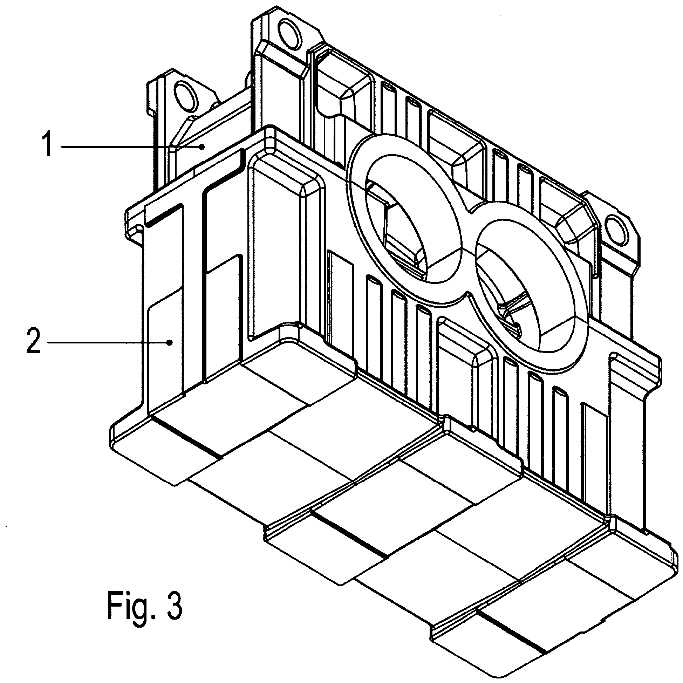

In der Figur 3 ist das erfindungsgemäße Getriebegehäuse in einer dritten Blickrichtung in Schrägansicht gezeigt.

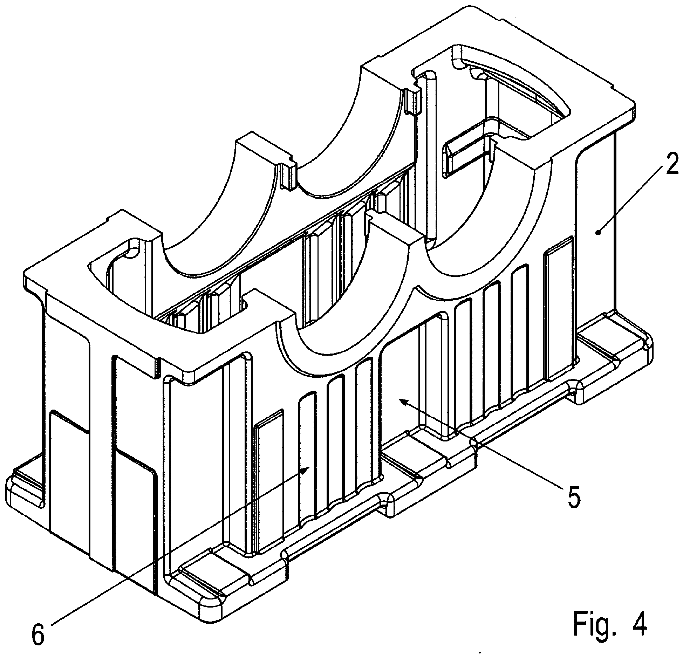

In der Figur 4 ist das Gehäuseunterteil 2 in Schrägansicht dargestellt.

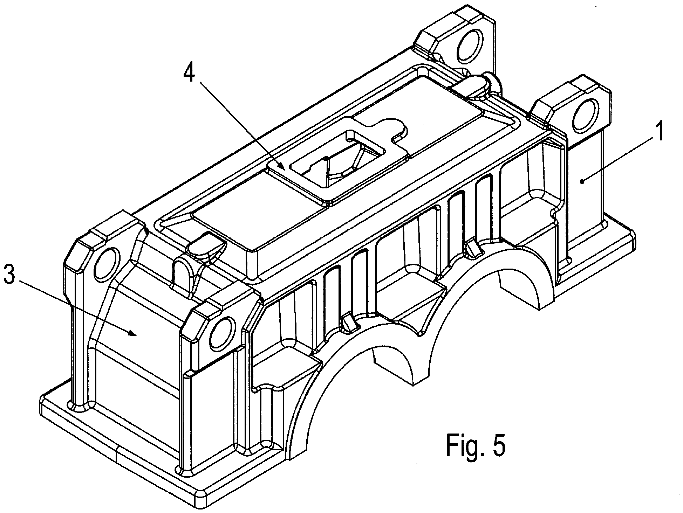

In der Figur 5 ist das Gehäuseoberteil 1 in Schrägansicht dargestellt.

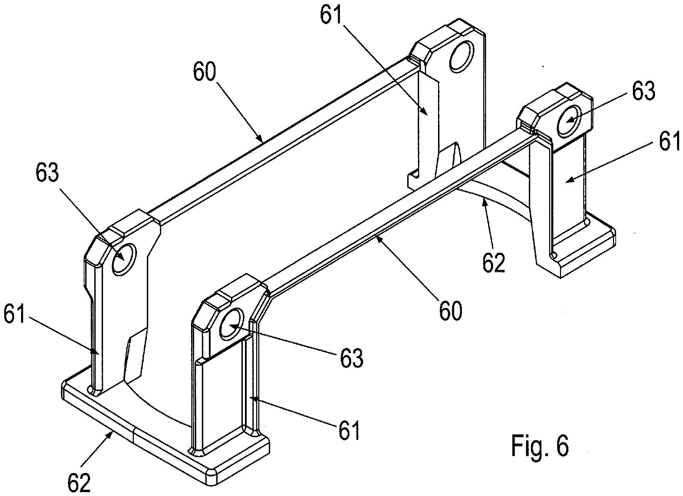

In der Figur 6 ist der rahmenförmige Tragabschnitt des Gehäuseoberteils 1 dargestellt.

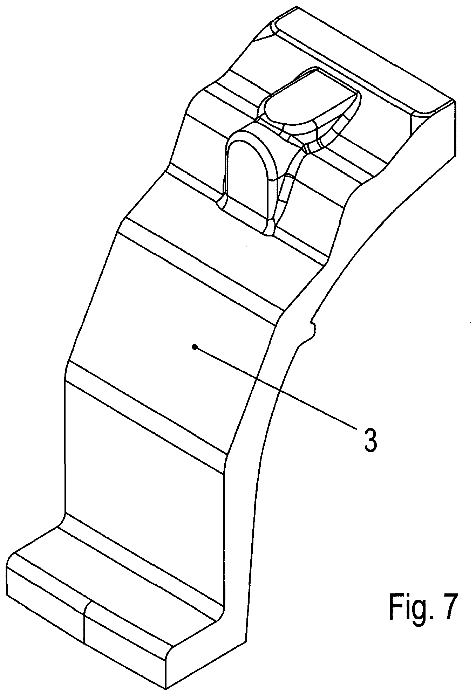

In der Figur 7 ist als Ausschnitt aus dem Gehäuseoberteil 1 ein Seitenwandabschnitt 3 gezeigt, welcher in den rahmenförmigen Tragabschnitt eingefügt ist.

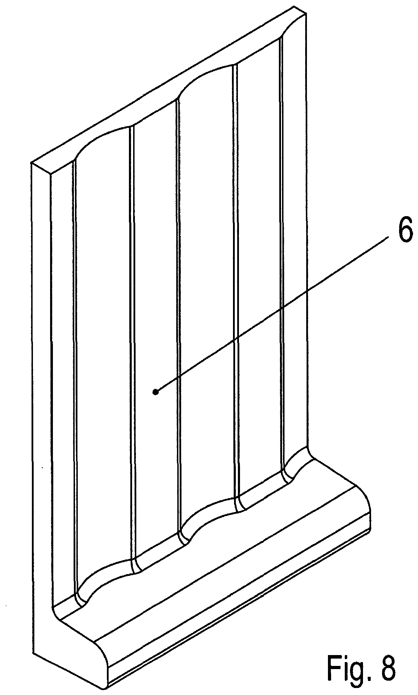

In der Figur 8 ist als Ausschnitt aus dem Gehäuseunterteil 2 ein Wandabschnitt mit Wellenstruktur gezeigt, insbesondere also einen konkav-konvex ausgebildetem Wandabschnitt.

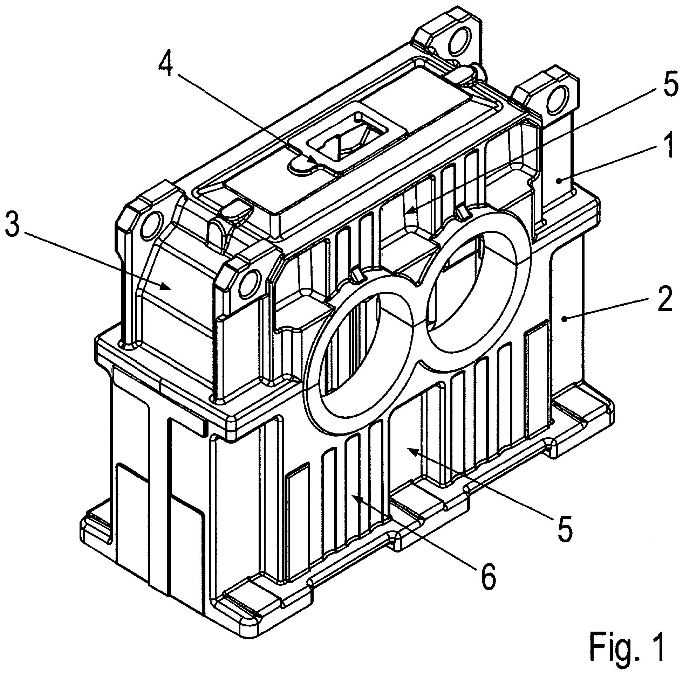

Wie in Figur 1 gezeigt, ist das Gehäuseunterteil 2 unter dem Gehäuseoberteil 1 angeordnet. In vertikaler Richtung ist also das Gehäuseoberteil 1 oberhalb des Gehäuseunterteils 2 angeordnet.

Das Gehäuseoberteil 1 weist einen rahmenförmigen Tragabschnitt auf, welcher den wesentlichen Teil der Kräfte aufnimmt und durchleitet. Die restlichen Abschnitte des Gehäuseoberteils 1 sind nur zum öldichten Einhausen des Getriebeinneren ausgebildet, also mit dünnerer Wandstärke ausgebildet als der Tragabschnitt, und schmiegen sich an den Tragabschnitt an.
Somit ist das Gehäuseoberteil 1 und auch das Gehäuseunterteil 2 schalenartig ausgeformt.

Der rahmenförmige Tragabschnitt des Gehäuseoberteils 1 weist eine erste Querrippe 62 auf. Diese erstreckt sich hauptsächlich in horizontaler Richtung.

Zwei erste Rippen 61 sind voneinander beabstandet und sind jeweils mit der ersten Querrippe 61 verbunden, insbesondere an zwei voneinander beabstandeten Stellen.

Die ersten Rippen 61 erstrecken sich hauptsächlich in vertikaler Richtung, sind also in vertikaler Richtung weiter ausgedehnt als in jeder hierzu transversalen Richtung.

Der rahmenförmige Tragabschnitt des Gehäuseoberteils 1 weist auch eine zweite Querrippe 62 auf. Diese erstreckt sich hauptsächlich in horizontaler Richtung.

Zwei zweite Rippen 61 sind voneinander beabstandet und sind jeweils mit der zweiten Querrippe 61 verbunden, insbesondere an zwei voneinander beabstandeten Stellen.

Die zweiten Rippen 61 erstrecken sich hauptsächlich in vertikaler Richtung, sind also in vertikaler Richtung weiter ausgedehnt als in jeder hierzu transversalen Richtung.

Jede erste Rippe 61 und jede zweite Rippe 61 weist an ihrem von der jeweiligen Querrippe abgewandten Endbereich eine Tragöse 63 auf. Somit ist das Getriebe mittels Haken oder Seil aufnehmbar an den Tragösen und einfach transportierbar. Die beim Transport auftretenden Kräfte werden als an den Tragösen 63 in die Endbereiche und somit den rahmenförmigen Tragabschnitt eingeleitet. Somit wird das Getriebegehäuse nur unwesentlich verformt und bleibt unbeschädigt.

Eine erste Rippe 61 ist an ihrem Endbereich mit einem Balken 60, insbesondere Tragbalken, verbunden, der an seinem anderen Ende mit dem Endbereich einer zweiten Rippe 61 verbunden ist. Ebenso ist die andere Rippe 61 an ihrem Endbereich mit einem Balken 60, insbesondere Tragbalken, verbunden, der wiederum an seinem anderen Ende mit dem Endbereich der anderen zweiten Rippe 61 verbunden ist. Die beiden Balken 60 sind parallel und voneinander beabstandet angeordnet.

Wie oben beschrieben, sind an dem so aus den Rippen 61, Querrippen 62 und Balken 60 gebildeten rahmenförmigen Tragabschnitt des Gehäuseoberteils 1 Wandabschnitte angeschmiegt, so dass das schalenartige Gehäuseoberteil einteilig ausformbar ist, insbesondere als Gussteil.

Hierbei sind also die Wandabschnitte, insbesondere auch zwei Seitenwandabschnitte 3 und der Wandabschnitt mit konkav-konvexer Wellenstruktur an das rahmenförmige Tragabschnitt angeformt und angeschmiegt und einstückig ausgebildet.

Die Balken 60 erstrecken sich hauptsächlich in horizontaler Richtung, sind also horizontalweiter ausgedehnt als in jeder hierzu transversalen Richtung.

Die Realisierung des rahmenförmigen Tragabschnitts erfolgt also durch eine Aufdickung der Wandstärke.

Zusätzlich sind auch aufgedickte Bereiche am Gehäuseoberteil 1 vorgesehen, welche als Lageraufnahme für zumindest einen Teil, insbesondere die Hälfte, des Umfangs eines Außenrings eines Lagers vorgesehen sind. Diese bogenartig ausgeformten aneinandergrenzenden, aufgedickten Bereiche sind mit den Querrippen 62 verbunden, insbesondere jeweils in demjenigen Endbereich, in welchem die jeweilige Rippe 61 verbunden sind.

Die konkav-konvexe Wellenstruktur der Wandabschnitte vergrößert die Oberfläche und verringert somit den Wärmeübergangswiderstand zur Umgebungsluft. Eine besonders starke Vertiefung ist hierbei als Vertiefung 5 für Betätigungsbereich für Schraubverbindungen vorgesehen. Dabei sind die in den Figuren nicht gezeigten Schrauben Verbindungsschrauben, mit welchen das Gehäuseoberteil 1 und das Gehäuseunterteil 2 schraubverbunden sind.

Das Gehäuseunterteil 2 weist eine Wellenstruktur 6 auf, insbesondere einen konkavkonvexen Wandabschnitt, der ebenfalls oberflächenvergrößernd ist und somit den Wärmeübergangswiderstand vom Getriebeinnenraum, insbesondere Schmieröl, zur Umgebungsluft hin verringert.

Der Gehäusedeckel 4 ist zum Verschließen einer Öffnung des Gehäuseoberteils 1 vorgesehen, welche von dem rahmenförmigen Tragabschnitt umfasst ist, insbesondere mit Abstand. Dies bedeutet, dass der rahmenförmige Tragabschnitt die Öffnung nicht direkt berührt, sondern von der Öffnung beabstandet ist.

### Bezugszeichenliste

1 Gehäuseoberteil
2 Gehäuseunterteil
3 Seitenwandabschnitt
4 Gehäusedeckel
5 Vertiefung für Betätigungsbereich für Schraubverbindungen
6 Wellenstruktur, insbesondere konkav-konvexer Wandabschnitt
60 Balken
61 Rippe
62 Querrippe
63 Tragösen

## Patentansprüche

1. Gehäuse für ein Getriebe,
wobei das Gehäuse ein Gehäuseoberteil (1) und ein Gehäuseunterteil (2) aufweist,
**wobei** das Gehäuseoberteil (1) einen rahmenförmigen Tragabschnitt aufweist, an dem
Wandabschnitte angeformt sind,
wobei der rahmenförmige Tragabschnitt mit den Wandabschnitten einstückig, also einteilig, ausgeformt ist, insbesondere als Gussteil, insbesondere als Stahlgussteil,
**wobei der rahmenförmige Tragabschnitt des Gehäuseoberteils (1) eine erste und eine zweite Querrippe (62) aufweist, insbesondere wobei die Querrippen (62) sich hauptsächlich in horizontaler Richtung erstrecken, insbesondere also in horizontaler Richtung weiter ausgedehnt sind als in jeder hierzu transversalen Richtung,**
**wobei der rahmenförmige Tragabschnitt zwei erste Rippen (61) aufweist,**
**wobei die zwei ersten Rippen (61) voneinander beabstandet und sind und jeweils mit der ersten Querrippe (62) verbunden sind, insbesondere an zwei voneinander beabstandeten Stellen,**
**insbesondere wobei die ersten Rippen (61) sich hauptsächlich in vertikaler Richtung erstrecken, insbesondere also in vertikaler Richtung weiter ausgedehnt sind als in jeder hierzu transversalen Richtung,**
**wobei zwei zweite Rippen (61) voneinander beabstandet sind und jeweils mit der zweiten Querrippe (62) verbunden sind, insbesondere an zwei voneinander beabstandeten Stellen,**
**insbesondere wobei die zweiten Rippen (61) sich hauptsächlich in vertikaler Richtung erstrecken, insbesondere also in vertikaler Richtung weiter ausgedehnt sind als in jeder hierzu transversalen Richtung,**
**dadurch gekennzeichnet, dass**
**jede erste Rippe (61) und jede zweite Rippe (61) an ihrem von der jeweiligen Querrippe (62) abgewandten Endbereich eine Tragöse (63) aufweist,**
**wobei eine der ersten Rippen (61) an ihrem Endbereich mit einem ersten Balken (60), insbesondere Tragbalken, verbunden ist, der an seinem anderen Ende mit dem Endbereich einer der zweiten Rippen (61) verbunden ist,**
**wobei die andere erste Rippe (61) an ihrem Endbereich mit einem zweiten Balken (60), insbesondere Tragbalken, verbunden ist, der wiederum an seinem anderen Ende mit dem Endbereich der anderen zweiten Rippe (61) verbunden ist,**
**insbesondere wobei die beiden Balken (60) parallel und voneinander beabstandet angeordnet sind,**
**wobei der rahmenförmige Tragabschnitt eine dickere Wandstärke aufweist als die restlichen Abschnitte des Gehäuseoberteils (1), welche sich an den rahmenförmigen Tragabschnitt anschmiegen.**

2. Gehäuse nach Anspruch 1,
**dadurch gekennzeichnet, dass**
die größte Wandstärke der Wandabschnitte kleiner ist als die größte Wandstärke des Tragabschnitts.

3. Gehäuse nach Anspruch 1 oder 2,
**dadurch gekennzeichnet, dass**
ein Gehäusedeckel (4) eine Öffnung des Gehäuseoberteils (1) verschließt, welche von dem rahmenförmigen Tragabschnitt umfasst ist, insbesondere mit Abstand, insbesondere so dass der rahmenförmige Tragabschnitt die Öffnung nicht direkt berührt, sondern von der Öffnung beabstandet ist.

4. Getriebe mit Gehäuse nach einem der Ansprüche 1 bis 3,
**dadurch gekennzeichnet, dass**
eine Welle des Getriebes mittels eines Lagers im Gehäuse gelagert ist,
wobei ein erster Teil **einer** Lageraufnahme **des Lagers** im Gehäuseoberteil und ein zweiter Teil der Lageraufnahme im Gehäuseunterteil angeordnet ist,
wobei der erste Teil der Lageraufnahme als aufgedickter Abschnitt ausgeführt ist und mit demjenigen Bereich der Querrippen (62) verbunden ist, an dem auch die jeweilige Rippe verbunden ist.

## Claims

1. Housing for a transmission,
wherein the housing comprises a housing upper part (1) and a housing lower part (2),
wherein the housing upper part (1) has a frame-like support section, on which wall sections are formed,
wherein the frame-like support section is formed in one piece, that is to say as one part, with the wall sections, in particular as a cast part, in particular as a cast steel part,
wherein the frame-like support section of the housing upper part (1) has a first and a second transverse rib (62), in particular wherein the transverse ribs (62) extend mainly in the horizontal direction, that is to say in particular are extended further in the horizontal direction than in any direction transverse thereto,
wherein the frame-like support section has two first ribs (61), wherein the two first ribs (61) are spaced apart from one another and are each connected to the first transverse rib (62), in particular at two spaced-apart points,
in particular wherein the first ribs (61) extend mainly in the vertical direction, that is to say in particular are extended further in the vertical direction than in any direction transverse thereto,
wherein two second ribs (61) are spaced apart from one another and are each connected to the second transverse rib (62), in particular at two spaced-apart points,
in particular wherein the second ribs (61) extend mainly in the vertical direction, that is to say in particular are extended further in the vertical direction than in any direction transverse thereto,
**characterized in that**
each first rib (61) and each second rib (61) has a lifting eye (63) at the end region thereof that is remote from the respective transverse rib (62),
wherein one of the first ribs (61) is connected at its end region to a first beam (60), in particular a supporting beam, which is connected at its other end to the end region of one of the second ribs (61),
wherein the other first rib (61) is connected at its end region to a second beam (60), in particular a supporting beam, which in turn is connected at its other end to the end region of the other second rib (61),
in particular wherein the two beams (60) are arranged parallel to and spaced apart from one another,
wherein the frame-like support section has a thicker wall thickness than the other sections of the housing upper part (1) which adjoin the frame-like support section.

2. Housing according to claim 1,
**characterized in that**
the greatest wall thickness of the wall sections is smaller than the greatest wall thickness of the support section.

3. Housing according to claim 1 or 2,
**characterized in that**
a housing cover (4) closes an opening of the housing upper part (1) that is surrounded by the frame-like support section, in particular at a distance, in particular such that the frame-like support section does not make direct contact with the opening but rather is spaced apart from the opening.

4. Transmission comprising a housing according to any one of claims 1 to 3,
**characterized in that**
a shaft of the transmission is mounted in the housing by means of a bearing,
wherein a first part of a bearing receptacle of the bearing is arranged in the housing upper part and a second part of the bearing receptacle is arranged in the housing lower part, wherein the first part of the bearing receptacle is configured as a thickened section and is connected to that region of the transverse ribs (62) to which also the respective rib is connected.

## Revendications

1. Carter destiné à une transmission,
ledit carter comprenant une partie supérieure (1) et une partie inférieure (2),
ladite partie supérieure (1) du carter étant munie d'une zone de support en forme de cadre, sur laquelle des zones de paroi sont ménagées solidairement,
la zone de support en forme de cadre étant constituée d'une seule pièce, c'est-à-dire d'un seul tenant avec lesdites zones de paroi, notamment en tant que pièce moulée, en particulier en tant que pièce moulée en acier,
ladite zone de support de la partie supérieure (1) du carter, en forme de cadre, comportant des première et seconde nervures transversales (62), sachant notamment que lesdites nervures transversales (62) s'étendent majoritairement dans la direction horizontale, c'est-à-dire, en particulier, que leur emprise est plus grande dans la direction horizontale que dans une quelconque direction transversale par rapport à cette dernière,
ladite zone de support en forme de cadre étant pourvue de deux premières nervures (61), lesquelles deux premières nervures (61) sont espacées l'une de l'autre et sont respectivement reliées à la première nervure transversale (62), notamment en deux emplacements distants l'un de l'autre,
sachant notamment que lesdites premières nervures (61) s'étendent majoritairement dans la direction verticale, c'est-à-dire, en particulier, que leur emprise est plus grande dans la direction verticale que dans une quelconque direction transversale par rapport à cette dernière,
deux secondes nervures (61) étant espacées l'une de l'autre et étant respectivement reliées à la seconde nervure transversale (62), notamment en deux emplacements distants l'un de l'autre,
sachant notamment que lesdites secondes nervures (61) s'étendent majoritairement dans la direction verticale, c'est-à-dire, en particulier, que leur emprise est plus grande dans la direction verticale que dans une quelconque direction transversale par rapport à cette dernière,
**caractérisé par le fait que**
chaque première nervure (61) et chaque seconde nervure (61) sont dotées d'un œillet de support (63) au niveau de leur région extrême tournée à l'opposé de la nervure transversale (62) considérée,
sachant que l'une des premières nervures (61) est reliée, au niveau de sa région extrême, à une première barrette (60) et notamment à une barrette de support reliée, au niveau de son autre extrémité, à la région extrême de l'une des secondes nervures (61),
l'autre première nervure (61) étant reliée, au niveau de sa région extrême, à une seconde barrette (60) et notamment à une barrette de support reliée à son tour, au niveau de son autre extrémité, à la région extrême de l'autre seconde nervure (61),
sachant notamment que les deux barrettes (60) sont disposées parallèlement et à distance l'une de l'autre,
la zone de support, en forme de cadre, présentant une plus forte épaisseur de paroi que les zones restantes de la partie supérieure (1) du carter qui se rattachent intimement à ladite zone de support en forme de cadre.

2. Carter selon la revendication 1,
**caractérisé par le fait que**
l'épaisseur de paroi maximale des zones de paroi est moindre que l'épaisseur de paroi maximale de la zone de support.

3. Carter selon la revendication 1 ou 2,
**caractérisé par le fait**
**qu'**un couvercle (4) dudit carter obture une ouverture de la partie supérieure (1) dudit carter qui est ceinturée, notamment à distance, par la zone de support en forme de cadre, en particulier de façon telle que ladite zone de support en forme de cadre ne touche pas directement l'ouverture, mais soit espacée de ladite ouverture.

4. Transmission équipée d'un carter conforme à l'une des revendications 1 à 3, **caractérisée par le fait**
**qu'**un arbre de ladite transmission est monté dans le carter au moyen d'un palier,
une première partie d'un logement dudit palier étant disposée dans la partie supérieure du carter, et une seconde partie dudit logement du palier étant disposée dans la partie inférieure dudit carter,
sachant que ladite première partie du logement du palier est réalisée en tant que zone épaissie, et est reliée à la région des nervures transversales (62) à laquelle la nervure considérée est pareillement reliée.
